(19) **Europäisches Patentamt**

**European Patent Office**

**Office européen des brevets**

(11) Veröffentlichungsnummer : **0 011 223 B1**

(12) **EUROPÄISCHE PATENTSCHRIFT**

(45) Veröffentlichungstag der Patentschrift :
28.04.82

(21) Anmeldenummer : 79104351.6

(22) Anmeldetag : 07.11.79

(51) Int. Cl.³ : **C 09 C 1/02, C 09 D 5/08, C 23 F 11/00**

(54) Anstrichfarbe oder Paste mit einem korrosionsinhibierenden Pigment auf Phosphatbasis.

(30) Priorität : **16.11.78 DE 2849712**

(43) Veröffentlichungstag der Anmeldung :
**28.05.80 (Patentblatt 80/11)**

(45) Bekanntmachung des Hinweises auf die Patenterteilung : **28.04.82 Patentblatt 82/17**

(84) Benannte Vertragsstaaten :
**AT BE CH DE FR GB IT NL SE**

(56) Entgegenhaltungen :
**DE - C - 977 735
DE - C - 977 737
FR - A - 2 295 101
GB - A - 904 861
GB - A - 915 512
US - A - 3 445 259**

(73) Patentinhaber : **HOECHST AKTIENGESELLSCHAFT
Postfach 80 03 20
D-6230 Frankfurt/Main 80 (DE)**

(72) Erfinder : **Mietens, Gerhard, Dr.
Schaesbergstrasse 5
D-5030 Hürth (DE)**
Erfinder : **Wasel-Nielen, Horst-Dieter, Dr.
Giselherweg 1
D-5030 Hürth (DE)**
Erfinder : **Hestermann, Klaus, Dr.
Am Wachberg 68
D-5042 Erftstadt (DE)**
Erfinder : **Kandler, Joachim, Dr.
Amselweg 10
D-5042 Erftstadt (DE)**
Erfinder : **Heymer, Gero, Dr.
Fasanenaue 12
D-5042 Erftstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Anstrichfabe oder Paste mit einem korrosionsinhibierenden Pigment auf Phosphatbasis

Die Erfindung betrifft eine Anstrichfabe oder Paste mit einem korrosionsinhibierenden Pigment auf Phosphatbasis für den Oberflächenschutz von Eisen und Eisenlegierungen.

Es ist seit langem bekannt, Anstrichmittel oder Spachtelmassen auf Bindemittelbasis, die Metallphosphate als schützendes Pigment enthalten, für den Aufbau von Schutzschichten auf Oberflächen aus Eisen oder Eisenlegierungen gegen die atmosphärische Korrosion zu verwenden. So wird in der GB-A-915 512 ein Pigment auf Basis von Calcium-phosphat und Zinkphosphat oder in der GB-A-990 167 ein Gemisch aus Calciumphosphat und Zinkoxid beschrieben.

In der US-A-3 445 259 wird ein Pigment, bestehend aus $CaHPO_4 \cdot 2H_2O$ und $CaSO_4 \cdot 2H_2O$, patentiert. Zur Herstellung dieses Pigments kann auch an Stelle von reinen Calciumverbindungen Dolomit benutzt werden. Dadurch enthält das Pigment neben Calciumsulfat eine Mischung von Calcium- und Magnesiumhydrogenphosphat.

In der DE-A-24 58 706 werden als korrosionsinhibierende Pigmente Magnesiumphosphate, insbesondere Trimagnesiumorthophosphat, beansprucht.

Gemäß der DD-A-114 423 wird als korrosionsinhibierendes Pigment ein saures Magnesiumphosphat vorgeschlagen, dem gegebenenfalls Aluminiumpaste zugesetzt werden kann.

In der FR-A-2 295 101 wird ein korrosionsinhibierendes Pigment, bestehend aus Zinkphosphat, bei dem ein Teil des Zinkphosphates durch Magnesiumphosphat ersetzt wird, unter Schutz gestellt.

Die nicht toxischen korrosionsinhibierenden Pigmente auf Phosphatbasis ergeben nicht den guten Korrosionsschutz wie die toxischen Pigmente von Bleimennige oder Metallchromaten, insbesondere von Zinkchromaten. Diese Pigmente weisen jedoch den Nachteil auf, daß es bei oberflächenbehandeltem Eisen oder Eisenlegierungen in Schweißnähten zu einer unerwünschten Porenbildung kommt und außerdem sowohl die Blei- als auch die Chromatverbindungen bei Schleif- und Schweißvorgängen in Stäube überführt werden und deshalb aus arbeitsmedizinischen Gründen Absaugvorrichtungen nötig sind.

Außerdem erfordern die modernen Punktschweißverfahren einen kleinen elektrischen Widerstand, der bei wasserfreien Pigmenten nicht immer gegeben ist.

Es war daher die Aufgabe gestellt, ein ungiftiges hochwirksames, korrosionsinhibierendes Pigment zu finden, welches in einem einfachen Arbeitsgang als Schutzschicht auf die Oberfläche von Eisen und Eisenlegierungen aufgebracht werden kann und bei nachträglichen Schweißarbeiten nicht stört.

Es wurde nun überraschenderweise gefunden, daß die ungenügende korrosionsinhibierende Wirkung der Einzelkomponenten Dicalciumphosphat und Dimagnesiumphosphat synergistisch gesteigert wird, wenn als korrosionsinhibierendes Pigment eine Mischung der sekundären Phosphate von Calcium und Magnesium eingesetzt wird. Dieser synergistische Effekt bei der Verwendung einer Mischung des sekundären Dicalcium- und Dimagnesiumphosphates erstreckt sich über einen weiten Mischungsbereich.

Besonders gute korrosionsinhibierende Eigenschaften haben Pigment-Mischungen, die bestehen aus 5-35 Gew% des $MgHPO_4 \cdot 3 H_2O$, Rest $CaHPO_4 \cdot 2 H_2O$.

Es hat sich gezeigt, daß bis zu 95 Gew% des Pigments durch Pigmentstreckungsmittel mit nur geringer Änderung der korrosionsinhibierenden Wirkung austauschbar sind. Als Pigmentstreckungsmittel können z.B. Baryte, Talkum, Erdalkalicarbonate oder Wollastonit eingesetzt werden. Es hat sich weiter gezeigt, daß die erfindungsgemäßen korrosionsinhibierenden Pigmente keine die spätere Farbgebung beeinflussende Eigenfarbe besitzen.

Die korrosionsinhibierenden Pigmente werden in Anstrichfarben wie lufttrocknenden Farben, in Einbrennlacken oder als Paste für den Oberflächenschutz von Eisen und Eisenlegierungen eingesetzt, wobei den Anstrichfarben oder Pasten übliche Bindemittel, Lösemittel, Füllstoffe und gebräuchliche Farbenveredelungsmittel zugesetzt werden. Gebräuchliche Farbenveredelungsmittel können ohne wesentlichen Einfluß auf die korrosionsinhibierenden Eigenschaften der erfindungsgemäßen Pigmente miteinander verarbeitet werden. Derartige gebräuchliche Farbenveredelungsmittel sind beispielsweise Titandioxid als Trübungsmittel, Asbestine oder Porzellanerde zur Verhütung des Absetzens der Feststoffe, Antimonoxid zur Verhütung des Auskreidens, Äthyl-methyl-Ketoxim gegen Hautbildungsvorgänge und Diatomeenerde zur Förderung des Ausbreitens der Anstrichmittel.

Das Pigment soll in der Anstrichfarbe oder Paste in einer Pigmentvolumenkonzentration (PVK) von 10 bis 60, vorzugsweise 20 bis 40, Vol% vorhanden sein. Unter Pigmentvolumenkonzentration wird der Volumenprozentsatz aller im Gesamtvolumen der getrockneten Schutzschicht enthaltenen Pigmente, einschließlich der Pigmentstreckungsmittel, verstanden.

Die erfindungsgemäßen Anstriche wurden in Kurzzeittests geprüft nach dem Salzsprühtest (ASTM B 117-64), dem Schwitzwassertest (DIN 500 17) und dem Kesternichtest (DIN 50018). Zur Testauswertung werden die Prüfbleche nach ihrem Rostgrad (Europäische Skala des Verrostungsgrades von Korrosionsschutzanstrichen - zu beziehen von « Fédération Nationale des Industries des Peintures, Vernis, Encres d'Imprimerie et Couleurs Fines, 42, Av. Marceau - 75008 Paris »-), ihrem Blasengrad (DIN 53209) und der Unterrostung am Kreuzschnitt bewertet. Den genormten Rostgrad- und Blasengradgrößen sowie der nach eigener Übereinkunft in Millimetern ausgemessenen Unterrostung werden jeweils Bewertungsziffern (BZ) von 0 bis 100 derart zugeordnet, daß mit steigendem Rostgrad bzw. Blasengrad bzw. Unterrostungsgrad die Bewertungsziffern von 100 auf 0 abfallen. In jedem der 3 Tests kann eine maximale Bewertungsziffer von 300 dann erreicht werden, wenn ein 100 %iger Korrosionsschutz vorliegt.

Um eine quantitative Aussage über das Korrosionsschutzpigment zu erhalten, werden die drei Bewertungsziffern zu einer einzigen Kennziffer (KZ) zusammengefaßt. Der Salzsprühtest gibt die Schutzwirkung bei atmosphärischen Langzeiteinflüssen am besten wieder. Deshalb wird der Salzsprühtest bei der Errechnung der Kennziffer mit dem doppelten Gewicht gewertet. Die Kennziffer wird errechnet nach der Formel

$$KZ = \frac{2 \cdot BZ(Salzsp.) + BZ(Schwitzw.) + BZ(Kesternich.)}{1\,200} \cdot 100$$

Bei 100 %igem Korrosionsschutz errechnet sich eine maximal mögliche Kennziffer von 100.

Die Erfindung wird durch folgende Beispiele näher erläutert :

### Beispiel 1

Folgende Bestandteile wurden in einem mit Rührvorrichtung versehenen Mischbehälter homogenisiert :

| | |
|---|---|
| Alkydharz (Alftalat AF 342 (R), Fa. Hoechst AG) | 38,0 Gew.-Teile |
| Äthylglykol | 4,0 " " |
| Testbenzin | 4,0 " " |
| n-Butanol | 0,5 " " |
| Hautverhinderungsmittel (Additol XL 297 (R), Fa. Hoechst AG) | 0,5 " " |
| Dimethyl-dioctadecyl-ammoniummontmorillonit (Bentone 34; 10 %ig, Fa. Titangesellschaft) | 1,0 " " |
| Talkum | 3,2 " " |
| Bariumsulfat | 4,6 " " |
| Titandioxid (RN 59, Fa. Titangesellschaft) | 4,8 " " |
| Summe $CaHPO_4 \cdot 2\,H_2O + MgHPO_4 \cdot 3\,H_2O$ | 5,2 " " |

Es wurde ein Korrosionsschutzmittel mit einer Pigmentvolumenkonzentration PVK = 20 eingestellt. Die Ergebnisse sind in der Tabelle zusammengefaßt.

### Beispiel 2

Folgende Bestandteile wurden wie in Beispiel 1 homogenisiert :

| | |
|---|---|
| Alkydharz (Alftalat AF 342 (R)) | 38,0 Gew.-Teile |
| Äthylglykol | 4,0 " " |
| Testbenzin | 4,0 Gew.-Teile |
| n-Butanol | 0,5 " " |
| Hautverhinderungsmittel (Additol XL 297 (R)) | 0,5 " " |
| Dimethyl-dioctadecyl-ammoniummontmorillonit (Bentone 34; 10 %ig) | 1,0 " " |
| Talkum | 10,0 " " |
| Bariumsulfat | 11,0 " " |
| Titandioxid (RN 59) | 13,0 " " |
| Summe $CaHPO_4 \cdot 2\,H_2O + MgHPO_4 \cdot 3\,H_2O$ | 18,0 " " |

Es wurde ein Korrosionsschutzmittel mit einer Pigmentvolumenkonzentration PVK = 36 eingestellt. Die Ergebnisse sind in der Tabelle zusammengefaßt.

3

**0 011 223**

Beispiel 3 (Vergleichsbeispiel)

Das Beispiel 1 wurde nachgearbeitet mit dem Unterschied, daß anstelle von $CaHPO_4 \cdot 2\,H_2O$ und $MgHPO_4 \cdot 3\,H_2O$ ein Zinkphosphat-Pigment der chemischen Formel $Zn_3(PO_4)_2 \cdot 2\,H_2O$ eingearbeitet wurde.

Es wurde eine Pigmentvolumenkonzentration PVK = 36 eingestellt.

Das Ergebnis ist in der Tabelle notiert.

Beispiel 4 (Vergleichsbeispiel)

Das Beispiel 1 wurde nachgearbeitet mit dem Unterschied, daß anstelle von $MgHPO_4 \cdot 3\,H_2O$ ein Zinkoxid-Pigment eingearbeitet wurde. Das Mischungsverhältnis von $CaHPO_4 \cdot 2\,H_2O$ zu Zinkoxid betrug 75 : 25.

Es wurde eine Pigmentvolumenkonzentration PVK = 36 eingestellt.

Das Ergebnis ist in der Tabelle notiert.

(Siehe die Tabelle Seite 5).

Tabelle

| Gewichtsprozent-Anteile im Aktivpigment | | | | Kennziffer | |
|---|---|---|---|---|---|
| $CaHPO_4 \cdot 2\,H_2O$ | $MgHPO_4 \cdot 3\,H_2O$ | $Zn_3(PO_4)_2 \cdot 2\,H_2O$ | $Zn\,O$ | $PVK = 20$ | $PVK = 36$ |
| 100 | – | – | – | 55 | 63 |
| 97 | 3 | – | – | 61 | 70 |
| 95 | 5 | – | – | 66 | 75 |
| 90 | 10 | – | – | 68 | 79 |
| 80 | 20 | – | – | 70 | 78 |
| 70 | 30 | – | – | 70 | 74 |
| 60 | 40 | – | – | 67 | 71 |
| 50 | 50 | – | – | 65 | 69 |
| 40 | 60 | – | – | 66 | 72 |
| 30 | 70 | – | – | 61 | 68 |
| 20 | 80 | – | – | 59 | 67 |
| 10 | 90 | – | – | 60 | 63 |
| 5 | 95 | – | – | 57 | 60 |
| 3 | 97 | – | – | 52 | 60 |
| – | 100 | – | – | 51 | 58 |
| – | – | 100 | – | – | 55 |
| 75 | – | – | 25 | – | 67 |

# 0 011 223

**Anspruch**

Anstrichfarbe oder Paste mit einem korrosionsinhibierenden Pigment auf Phosphatbasis für den Oberflächenschutz von ɛen und Eisenlegierungen, dadurch gekennzeichnet, daß das korrosionsinhibierende Pigment aus bis 35 Gew% MgHPO$_4 \cdot$ 3 H$_2$O, Rest CaHPO$_4 \cdot$ 2 H$_2$O besteht und in der getrockneten Schutzschɛ.ɛht das korrosionsinhibierende Pigment in einer Pigmentvolumenkonzentration von 10 bis 60, vorzugsweise von 20 bis 40 Vol%, vorhanden ist.

**Claim**

Painting composition or paste containing a phosphate based, corrosion-inhibiting pigment for protecting iron and iron alloy surfaces characterized in that the corrosion-inhibiting pigment consists to an extent of 5 to 35 weight % of MgHPO$_4 \cdot$ 3 H$_2$O, the balance being CaHPO$_4 \cdot$ 2 H$_2$O, and the corrosion-inhibiting pigment is present in the dried protective coating in a pigment volume concentration of 10 to 60, preferably 20 to 40, volume %.

**Revendication**

Peinture ou pâte comportant un pigment inhibiteur de corrosion à base de phosphate pour la protection de surfaces en fer et en alliages de fer, caractérisée en ce que le pigment inhibiteur de corrosion consiste en 5 à 35 % en poids de MgHPO$_4$, 3 H$_2$O et le reste de CaHPO$_4$, 2 H$_2$O et le pigment inhibiteur de corrosion est présent dans la couche protectrice séchée à une concentration en volume de pigment de 10 à 60, de préférence de 20 à 40 % en volume.